# EUROPEAN PATENT SPECIFICATION

(11) **EP 0 656 838 B1**
(45) Date of publication and mention of the grant of the patent: **29.01.1997**
(21) Application number: 93916351.5
(22) Date of filing: 29.06.1993
(51) Int. Cl.: B60K 11/08, B60Q 1/04, B62D 25/08, B62D 65/00

(54) **A VEHICLE RADIATOR GRILLE, A HEADLIGHT HOUSING AND A METHOD OF MOUNTING THE GRILLE ONTO A VEHICLE**
SCHEINWERFERGEHÄUSE UND KÜHLERGITTER EINES FAHRZEUGS, SOWIE VERFAHREN ZUR BEFESTIGUNG EINES KÜHLERGITTERS AUF EINEM FAHRZEUG
CALANDRE DE VEHICULE, CARTERS DE PHARE ET PROCEDE DE MONTAGE DE CALANDRE SUR UN VEHICULE

(43) Date of publication of application: 14.06.1995
(73) Proprietor: SAAB AUTOMOBILE AKTIEBOLAG, 461 80 Trollhättan (SE)
(72) Inventor: MAAE JENSEN, Henrik, S-462 37 Vänersborg (SE); DANIELSSON, Kent, S-458 30 Färgelanda (SE); LINDBERG, Lars, S-461 62 Trollhättan (SE)
(74) Representative: Holmborn, Erland Karl
(86) International application number: SE9300587
(87) International publication number: WO9501264

(56) References cited:
- EP-A- 0 332 846
- EP-A- 0 463 483
- DE-A- 2 355 972
- US-A- 4 379 648

## Description

This invention relates to an improved radiator grille arrangement where the grille can be attached to the vehicle front without the need for any tools.

### State of the art.

In a typical arrangement the radiator grille is mounted on the front of the vehicle between the headlight housings. The most common method of fixing the grille to the vehicle is by the use of screws, typically self tapping screws which are generally arranged in a horizontal configuration to fasten the grille to a portion of the vehicle body sheet metal.

This method generally requires the use of tools on the vehicle production line, sometimes special tools. Furthermore there can be a build up of tolerances between the headlight housings, vehicle body, and grille which may cause unsightly gaps between the grille and the headlight housings, or other vehicle body components.

In EP-A-332 846, there is disclosed a radiator grille that has on a lower portion projections which push into an elastomeric grommet in a car body member, and on its upper portion resilient clips that snap into the vehicle bodywork. Again such mounting means suffer from the problems of a build up of a chain of tolerances.

### Objective and brief description of the invention.

The present invention provides a different approach to mounting radiator grilles in vehicles and which avoid the problems associated with the build up of tolerances.

Accordingly there is provided a method of mounting a vehicle radiator grille between spaced headlights on the vehicle characterised in that the radiator grille is fixed directly to attachment means formed on the vehicle headlight housing.

Preferably the lower portion of the grille is secured to the headlight housings by means that allow vertical movement of the radiator grille relative to the headlight housing, and the upper portion of the grille is secured to the headlight housing using a snap-in connection therebetween.

Also according to the invention there is provided a radiator grille for mounting a motor vehicle between a pair of headlights, the radiator grille having attachment means at each end portion thereof for securing the grille in the vehicle headlight housings and comprising first attachment means adjacent a lower portion of the grille and having a sliding connection to the headlight housing to allow relative vertical play and a second attachment means adjacent the upper portion of the grille which has a vertical holding surface engageable with the headlight housing to lock the grille into position.

Preferably the first attachment means comprises an elongated slot on the grille which is engageable with a transverse horizontal pin on the headlight housing, and the second attachment means is a resilient snap-in connection between the headlight housing and the grille.

In yet a further invention there is provided a headlight housing having, on its axial inner side, attachment points for securing a radiator grille thereto.

Preferably the headlight housing attachment point comprise an upper attachment means forming part of a snap-in connection with the grille, and the lower attachment point has a guide surface that permits vertical and transverse relative movement of the radiator grille whilst restricting its longitudinal movement.

The head light housing is preferably a plastic moulding preferably a nylon moulding although alternative materials such other plastics or die-cast zinc, may be suitable, and the attachment means are moulded into the housing or alternatively could be integrally moulded therewith out of the housing material.

### Description of the drawings.

The invention will be described by way of example and with reference to the accompanying drawings in which:-
- Fig 1: is a schematic view of a car body and headlight housing as used in the present invention,
- Fig 2: is an isometric view of a headlight housing according to one embodiment of the present invention,
- Fig 3: is an isometric view of a radiator grille according to the present invention.

For the sake of clarity the vehicle orientation axes X, Y, Z are shown separately in each figure.

### Description of an exemplary embodiment.

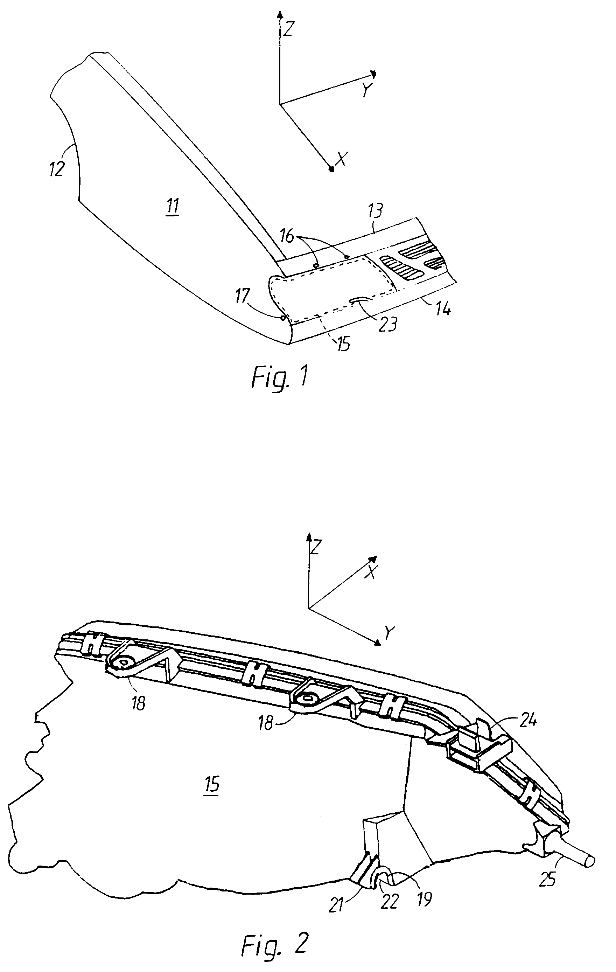

With reference to Fig 1 and Fig 2, there is shown a vehicle body 11 having a front right hand wheel housing 12 and upper and lower horizontal front cross members 13 and 14. A headlight housing 15 (only one of which is shown) is located on each side of the vehicle.

The headlight housing 15 is shown in detail in Fig 2 and is fixed to the upper and lower cross member 13 and 14 by vertical screws 16 and a horizontal screw 17 (only the heads are shown in Fig 1), and a horizontal pin 23 fixed to the lower cross member 14. The headlight housing 15 has a pair of substantially horizontal lugs 18 on its upper edge which extend longitudinally of the vehicle on 'X' axes for fixing to the upper cross member 13 by the vertical screws 16. The lower portion of housing 15 is fixed at its outer side (outer with respect to the vehicle longitudinal centreline ) by the screw 17 which fixes into a lower lug (not shown) and at its inner side by an elongated slot 19 in a lug 21 which engages the transverse horizontal pin 23.

The slot 19 allows guided movement in one direction designated as the vertical direction and on a 'Z' axis of the vehicle, and transversely of the vehicle along a 'Y' axis whilst resisting longitudinal movement on an 'X' axis. The slot 19 has an arcuate end surface 22 which engages the horizontal pin 23.

The headlight housing 15 has on its axial inner side a pair of attachment means, a first lower attachment means 25, and a second upper attachment means 24. The lower attachment means 25 is at the lower inner corner and comprises a horizontal pin which is directed along a 'Y' axis transverse of the vehicle. The pins 25 on the two housings 15 are directed towards each other. The upper attachment means 24 is a vertical resilient loaded detent arranged at the upper inner corner of the housing 15. The pin 25 may be moulded into the housing 15, or could be formed integrally from the same material as the housing. The detent 24 may be a metal spring which is fitted to a lug on the housing or may also moulded into the housing 15. The detent 24 could also be a resilient clip moulded out of the same material as the housing 15.

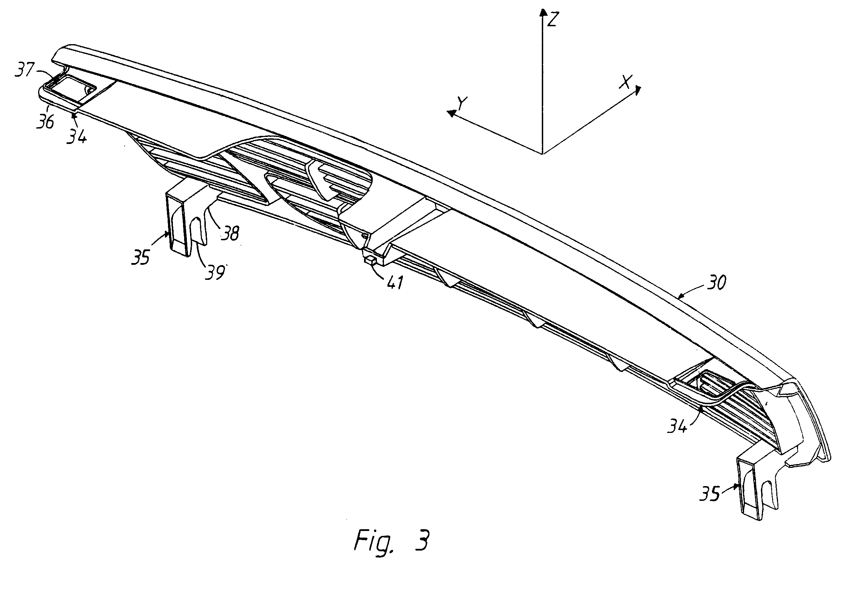

With reference now to Fig 3, there is disclosed a radiator grille 30 which in use is mounted between the headlight housings 15.

The grille 30 may be moulded into one part or assembled from an outer chrome plated part and an inner part having slats of a contrasting colour. The grille 30 has first and second attachment means 35, 34 at each end portion thereof for securing the radiator grille 30 to the attachment means 25, 24 on the headlight housings 15.

The first lower attachment means 35 each comprise a lug 38 with an elongated slot 39 therein which allows vertical movement along a 'Z' axis but has guide surfaces that engage a respective pin 25 on the headlight housing 15 to hold the grille against 'X' axis movements, whilst allowing lateral movement along a 'Y' axis.

The pins 25 on the headlight housings have corresponding guide surfaces which permit vertical and transverse relative movement of the radiator grille whilst restricting its longitudinal movement.

The second upper attachment means 34 each comprise a lug 36 extending longitudinally along an 'X' axis of the vehicle with a hole 37 therein. The holes 37 are each arranged to co-operate with a respective upper resilient detent 24 on the housing 15 so that an edge of the hole 37 provides a vertical holding surface to lock the grille 30 in position against horizontal movement along an 'X' axis.

The grille lower attachment means 35 can engage the pins 25 on the housing 15 at a suitable orientation, to secure the lower portion of the grille. The grille is then pivoted to a vertical position until the holes 37 on the lugs 36 align with the detents 24 on the headlight housing 15. The grille 30 is then moved vertically downwards relative to the headlighthousing to snap the detents 24 into their respective holes 37.

Since the upper attachment means 34 on the grille have vertically directed holding surfaces, the grille cannot be removed without exposing the upper attachment means 24, 34 to release the detent. According to the described embodiment the detent can only be exposed by raising the bonnet, thus greatly reducing the risk of theft.

As the grille 30 is mounted directly into the headlight housings 15 the problems of chains of tolerances are minimised allowing a good fitting of the grille relative to the headlight housings.

The centre of the grille 30 has a guide 41 thereon to assist location on the vehicle body along a 'Y' axis.

A number of alternative embodiments of the invention may exist.

The detent and the hole of the second attachment means may switch positions, the detent then being mounted on the grille and the hole on the headligt housing. An advantage of this embodiment is that the detent may have a better protected position when the bonnet is raised, and therefore reducing the risk of damage during repairs of the vehicle or other similar circumstances.

If the detent is mounted to the headlight housing, as in the described embodiment, the grille will not comprise any loose or easily breakable parts which may make transports from the manufacturer to the assembly line easier. The headlight housing still has a complicated form, thus making the presence of the detent a minor factor.

The pin and the slot of the first attachment means may also switch posions in a similar way.

In yet another embodiment the first and second attachment means may switch positions, the snap-in connection then being located on the lower portion of the grille. This embodiment may however cause a more comlpicated procedure when mounting the grille.

## Claims

1. A method of mounting a vehicle radiator grille (30) between spaced headlights on the vehicle characterised in that the radiator grille (30) is moved from outside the vehicle and fixed directly to attachment means (24,25) formed on the vehicle headlight housing (15).

2. A method as claimed in Claim 1 wherein a first portion of the grille (30) is secured to the headlight housings (15) by a first attachment means (35) that allow vertical movement of the radiator grille relative to the headlight housings, and a second portion is secured to the headlight housing (15) by a second attachment means (24,34 )in shape of a snap-in connection therebetween.

3. A method as claimed in Claim 2 wherein the first portion of the grille (30) is located below the second portion.

4. A method as claimed in Claim 2 or Claim 3, wherein the snap-in connection ( 24,34) is made by downward vertical movement of the grille (30) relative to the headlight housing (15).

5. A method as claimed in any one of Claims 2 to 4 wherein the snap-in connections (24,34 ) each comprise at least one resilient clip (24) having a detent thereon which engages in a corresponding hole (37), the clip (24) being mounted on the housing (15) and the hole (37) being located on the second portion of the grille (30).

6. A method as claimed in any one of Claims 2 to 5 wherein the first attachment means (25) each comprise a vertical pin which engages in a corresponding slot (39), the pin being located on the housing and the slot (39) being located on the grille (30).

7. A radiator grille (30) for mounting on a motor vehicle between a pair of headlights characterised in that the radiator grille (30) has attachment means (34,35) at each end portion thereof for securing the grille to the vehicle headlight housings (15) and comprising first attachment means (35) having a sliding connection (39) to the headlight housing (15) to allow relative vertical play and a second attachment means (34) in shape of a snap-in connection engagable with the housing to lock the grille (30) into position.

8. A radiator grille (30) as claimed in Claim 7 wherein the first attachment means (35) is adjacent a lower portion of the grille (30) and the second attachment means (34) is adjacent an upper portion of the grille (30).

9. A radiator grille as claimed in Claim 7 or 8 wherein the second attachment means (34) is one part of a snap-in connection (24,34) comprising a resilient detent (24)and a corresponding holding surface (37), where the other part of the snap-in connection is located on the headlight housing, the holding surface (37) being vertical and located on the grille (30) and comprising the sides of a hole (37).

10. A radiator grille as claimed in any one of Claims 7 to 9 wherein each first attachment means (35) is an elongated slot (39) which engages a transverse horizontal pin (25), where either the slot (39) or the pin (25) is located on the grille (30).

11. A radiator grille as claimed in Claim 10 wherein the elongated slot is located on the grille (30).

12. A headlight housing (15) characterised in having on its axial inner side, attachment means (24 25) for securing a radiator grille (30) thereto.

13. A headlight housing (15) as claimed in Claim 12 wherein the attachment means comprise a first attachment means (25) having a guide surface that permits vertical and transverse relative movement of the radiator grille whilst restricting its longitudinal movement, and a second attachment means (24) forming part of a snap-in connection with the grille.

14. A headlight housing (15) as claimed in Claim 13 wherein the first attachment means (25) is located below the second attachment means (24).

## Patentansprüche

1. Verfahren zum Befestigen eines Fahrzeugkühlergrills (30 ) zwischen mit Abstand voneinander angeordneten Frontscheinwerfern an dem Fahrzeug,
dadurch gekennzeichnet, daß der Kühlergrill (30) von außerhalb des Fahrzeugs herangeführt und direkt an Befestigungen (24, 25) angebracht wird, die am Fahrzeugfrontscheinwerfergehäuse (15) ausgebildet sind.

2. Verfahren nach Anspruch 1,
bei dem ein erster Teil des Grills (30) an den Scheinwerfergehäusen (15) durch erste Befestigungsmittel (35) befestigt wird, die eine Vertikalbewegung des Kühlergrills relativ zu den Scheinwerfergehäusen gestatten, und bei dem ein zweiter Teil an dem Scheinwerfergehäuse (15) durch zweite ßefestigungsmittel (24, 34) in Gestalt einer dazwischenliegenden Einschnappverbindung befestigt wird.

3. Verfahren nach Anspruch 2,
bei dem der erste Teil des Grills (30) unterhalb des zweiten Teiles angeordnet ist.

4. Verfahren nach Anspruch 2 oder Anspruch 3,
bei dem die Einschnappverbindung (24, 34) durch eine vertikal nach unten gerichtete Bewegung des Grills (30) relativ zu dem Scheinwerfergehäuse (15) hergestellt wird.

5. Verfahren nach einem der Ansprüche 2 bis 4,
bei dem die Einschnappverbindungen (24, 34) je zumindest einen federnden Clip (24) mit einem Rasthaken darauf umfassen, der in ein entsprechendes Loch (37) eingreift, wobei der Clip (24) an dem Gehäuse (15) angebracht ist und das Loch (37) in dem zweiten Teil des Grills (30) angeordnet ist.

6. Verfahren nach einem der Ansprüche 2 bis 5,
bei dem die ersten Befestigungsmittel (25) je einen vertikalen Stift aufweisen, der in einen korrespondierenden Schlitz (39) eingreift, wobei der Stift am Gehäuse und der Schlitz (39) am Grill (30) angeordnet ist.

7. Kühlergrill (30) zur Befestigung an einem Kraftfahrzeug zwischen einem Paar Frontscheinwerfer,
dadurch gekennzeichnet, daß der Kühlergrill (30) an jedem seiner Endabschnitte Befestigungsmittel (34, 35) zum Befestigen des Grills an den Fahrzeugfrontscheinwerfergehäusen (15) hat, und erste Befestigungsmittel (35) mit einer Schiebeverbindung (39) zu dem Frontscheinwerfergehäuse (15), um ein relatives vertikales Spiel zu gestatten, und zweite Befestigungsmittel (34) in Gestalt einer Einschnappverbindung aufweist, die mit dem Gehäuse in Eingriff bringbar ist, um den Grill (30) in Einbaustellung zu arretieren.

8. Kühlergrill (30) nach Anspruch 7,
bei dem die ersten Befestigungsmittel (35) sich nahe einem unteren Abschnitt des Grills (30) und die zweiten Befestigungsmittel (34) sich nahe einem oberen Abschnitt des Grills (30) befinden.

9. Kühlergrill nach Anspruch 7 oder 8,
bei dem die zweiten Befestigungsmittel (34) ein Teil einer Einschnappverbindung (24, 34) sind, die einen federnden Rasthaken (24) und eine entsprechende Haltefläche (37) umfaßt, wobei der andere Teil der Einschnappverbindung in dem Frontscheinwerfergehäuse angeordnet ist, und die Haltefläche (37) vertikal verläuft, am Grill (30) angeordnet ist und die Seiten eines Lochs (37) umfaßt.

10. Kühlergrill nach einem der Ansprüche 7 bis 9,
bei dem jedes erste Befestigungsmittel (35) ein länglicher Schlitz (39) ist, der mit einem horizontalen Querstift (25) in Eingriff tritt, wobei entweder der Schlitz (39) oder der Stift (35) an dem Grill (30) angeordnet ist.

11. Kühlergrill nach Anspruch 10,
bei dem der längliche Schlitz an dem Grill (30) angeordnet ist.

12. Frontscheinwerfergehäuse (15),
dadurch gekennzeichnet, daß auf seiner axial inneren Seite Befestigungsmittel (24, 25) zum Befestigen eines Kühlergrills (30) daran vorhanden sind.

13. Frontscheinwerfergehäuse (15) nach Anspruch 12,
bei dem die Befestigungsmittel erste Befestigungsmittel (25) mit einer Führungsfläche umfassen, die eine vertikale und querverlaufende Relativbewegung des Kühlergrills zuläßt und seine Verschiebung in Längsrichtung verhindert, und bei dem zweite Befestigungsmittel (24) einen Teil einer Einschnappverbindung mit dem Grill bilden.

14. Frontscheinwerfergehäuse (15) nach Anspruch 13,
bei dem die ersten Befestigungsmittel (25) unterhalb der zweiten Befestigungsmittel (24) angeordnet sind.

## Revendications

1. Un procédé de montage d'une calandre de radiateur de véhicule (30) entre des phares espacés sur le véhicule, caractérisé en ce que la calandre de radiateur (30) est déplacée depuis l'extérieur du véhicule et est fixée directement à des moyens de fixation (24, 25) formés sur le corps de phare (15) du véhicule.

2. Un procédé selon la revendication 1, dans lequel une première partie de la calandre (30) est fixée sur les corps de phare (15) par des premiers moyens de fixation (35) qui permettent un déplacement vertical de la calandre de radiateur par rapport aux corps de phare, et une deuxième partie est fixée sur le corps de phare (15) par des deuxièmes moyens de fixation (24, 34) en forme d'attache encliquetable entre les deux.

3. Un procédé selon la revendication 2, dans lequel la première partie de la calandre (30) est située au-dessous de la deuxième partie.

4. Un procédé selon la revendication 2 ou la revendication 3, dans lequel l'attache encliquetable (24, 34) réalise une connexion par un déplacement vertical dirigé vers le bas de la calandre (30) par rapport au corps de phare (15).

5. Un procédé selon l'une quelconque des revendications 2 à 4, dans lequel les attaches encliquetables (24, 34) comprennent chacune au moins une agrafe élastique (24) pourvue d'un cliquet qui s'engage dans un trou correspondant (37), l'agrafe (24) étant montée sur le corps (15) et le trou (37) étant situé sur la deuxième partie de la calandre (30).

6. Un procédé selon l'une quelconque des revendications 2 à 5, dans lequel les premiers moyens de fixation (25) comprennent, chacun, un axe vertical qui s'engage dans une fente correspondante (39), l'axe étant situé sur le corps de phare et la fente (39) étant située sur la calandre (30).

7. Une calandre de radiateur (30) à monter sur un véhicule automobile entre deux phares, caractérisée en ce que la calandre de radiateur (30) comprend des moyens de fixation (34, 35) à chacune de ses parties d'extrémité, servant à fixer la calandre sur les corps de phares (15) du véhicule et comprenant des premiers moyens de fixation (35) comportant une attache glissante (39) de connexion au corps de phare (15) pour ménager un jeu vertical relatif et des seconds moyens de fixation (34) en forme d'attache encliquetable apte à venir en prise avec le corps pour verrouiller la calandre (30) en position.

8. Une calandre de radiateur (30) selon la revendication 7, dans laquelle les premiers moyens de fixation (35) sont adjacents à une partie inférieure de la calandre (30) et les deuxièmes moyens de fixation (34) sont adjacents à une partie supérieure de la calandre (30).

9. Une calandre de radiateur selon la revendication 7 ou 8, dans laquelle les deuxièmes moyens de fixation (34) sont une partie d'une attache encliquetable (24, 34) comprenant un cliquet élastique (24) et une surface de retenue correspondante (37), alors que l'autre partie de l'attache encliquetable est située sur le corps de phare, la surface de retenue (37) étant verticale et disposée sur la calandre (30) et comprenant les côtés d'un trou (37).

10. Une calandre de radiateur selon l'une quelconque des revendications 7 à 9, dans laquelle chacun des premiers moyens de fixation (35) est une fente allongée (39) dans laquelle s'engage un axe horizontal transversal (25), la fente (39) ou l'axe (25) étant situé sur la calandre (30).

11. Une calandre de radiateur selon la revendication 10, dans laquelle la fente allongée est située sur la calandre (30).

12. Un corps de phare (15) caractérisé en ce qu'il comporte sur son côté axial intérieur des moyens de fixation (24, 25) pour y fixer une calandre de radiateur (30).

13. Un corps de phare (15) selon la revendication 12, dans lequel les moyens de fixation comprennent des premiers moyens de fixation (25) pourvus d'une surface de guidage qui permet un déplacement relatif vertical et transversal de la calandre de radiateur, tout en limitant son déplacement longitudinal, et des deuxièmes moyens de fixation (24) faisant partie d'une attache encliquetable de connexion à la calandre.

14. Un corps de phare (15) selon la revendication 13, dans lequel les premiers moyens de fixation (25) sont situés au-dessous des deuxièmes moyens de fixation (24).
